(19) **Europäisches Patentamt**
**European Patent Office**
**Office européen des brevets**

(11) Publication number : **0 330 200 B1**

(12) # EUROPEAN PATENT SPECIFICATION

(45) Date of publication of patent specification :
**15.07.92 Bulletin 92/29**

(51) Int. Cl.[5] : **C08L 27/12,** C08L 27/16,
C08L 83/08, // (C08L27/12,
83:04), (C08L27/16, 83:04),
(C08L83/08, 83:04)

(21) Application number : **89103188.2**

(22) Date of filing : **23.02.89**

(54) **Fluororubber composition containing dispersed particles of cured silicone material.**

(30) Priority : **24.02.88 JP 41553/88**

(43) Date of publication of application :
**30.08.89 Bulletin 89/35**

(45) Publication of the grant of the patent :
**15.07.92 Bulletin 92/29**

(84) Designated Contracting States :
**BE DE FR GB**

(56) References cited :
**US-A- 3 415 900
US-A- 3 538 028
PATENT ABSTRACTS OF JAPAN, vol. 9, no.
188 (C-295)[1911], 3rd August 1985; & JP-A-60
58 455 (NIPPON GENSHIRYOKUKENKYUSHO)
04-04-1985**

(73) Proprietor : **TORAY SILICONE COMPANY,
LIMITED
2-3-16, Muro-machi Nihonbashi
Chuo-ku Tokyo 103 (JP)**

(72) Inventor : **Yoshida, Keiji
6, 1-chome, Yushudai Nishi
Ichihara-shi Chiba-Prefecture (JP)**
Inventor : **Saito, Masayuki
349, Iigura
Tamamura-machi Sawa-gun Gunma
Prefecture (JP)**
Inventor : **Hamada, Mitsuo
3-5-17 Okubo
Ichihara-shi Chiba Prefecture (JP)**

(74) Representative : **Spott, Gottfried, Dr. et al
Patentanwälte Spott und Puschmann
Sendlinger-Tor-Platz 11
W-8000 München 2 (DE)**

## Description

The present invention relates to a fluororubber composition, and, more specifically, relates to a fluororubber composition which is highly suitable for blending or processing on a roll mill and which is readily released from molds during a molding operation.

Organic fluorine containing rubbers, also referred to as fluororubbers, are used in a broad range of industrial applications due to their excellent mechanical properties. A shortcoming of these rubbers is the difficulty of fabricating them on roll mills and achieving a good release of the cured fluororubber from molds. In addition, the molds have a definite tendency to become soiled during molding operations, which together with the poor release properties results in a high reject rate.

The use of finely divided fluororubber particles as modifiers for a polyorganosiloxane elastomer is disclosed in Japanese unexamined published application no. 60/105,557, which issued on June 11, 1985. Japanese unexamined published application no. 60/112,431, which was published on June 18, 1985, teaches using these modified fluororubber compositions as the material for preparing thermal fixing rolls for electrostatic copying machines.

United States Patent No. 4,488,771, which issued on December 17, 1984, describes molding compositions comprising a matrix of a fluorosilicone elastomer and a crosslinking agent containing dispersed particles of a solid fluorocarbon telomer.

United States Patent No. 4,010,136, which issued on March 1, 1977 discloses polyorganosiloxane elastomer compositions containing a silica filler, an organic peroxide and powdered polytetrafluoroethylene as a dispersed phase.

In all of the aforementioned prior art the continuous phase is a polyorganosiloxane and the dispersed phase is a fluorocarbon polymer.

The present invention was the result of extensive investigations directed at solving the aforementioned problems with fluororubbers.

The object of the present invention is to provide a fluororubber composition which is excellent with respect to its ability to be fabricated on roll mills and the low reject rate of articles molded from these compositions.

The present invention also provides a method for improving the processability of curable fluororubber compositions, specifically the ability of these compositions to be molded and fabricated using roll mills typically used for other types of rubber compositions.

The objective of the present invention is achieved by incorporating into a fluororubber from 0.1 to 30 weight parts per 100 weight parts of fluororubber of a finely divided particulate silicone material.

This invention provides an improved fluororubber composition comprising 100 weight parts of a fluororubber and an amount of curing agent sufficient to cure said fluororubber, where the improvement comprises the presence in said composition of from 0.1 to 30 weight parts of a finely divided cured silicone material in the form of a rubber, gel or resin, where said silicone material exhibits an average particle diameter not exceeding 100 micrometers.

A method for improving the processability of a curable composition comprising 100 weight parts of a fluororubber and an amount of curing agent sufficient to cure said fluororubber, comprises combining said composition with from 0.1 to 15 weight parts of a finely divided cured silicone material in the form of a rubber, gel or resin, where said silicone material exhibits an average particle diameter not exceeding 100 micrometers.

To explain the present invention in greater detail, the fluororubber compositions of this invention contain a curable fluorine-containing organic or fluorine-containing organosiloxane polymer as its main ingredient . The cured polymer is a rubbery elastomer. Such fluororubbers are described, for example, in the "Compendium of Synthetic Rubber Processing Technology. Fluororubber/Silicone Rubber." [in Japanese] (Yuzuru Komeya, et al., authors, published by Kabushiki Kaisha Taisei-sha).

Examples of suitable fluororubbers include but are not limited to (1) vinylidene fluoride-based polymers such as chlorotrifluoroethylene/-vinylidene fluoride copolymers, pentafluoropropene/vinylidene fluoride copolymers, and hexafluoropropene/vinylidene fluoride copolymers; and (2) fluorosilicone rubbers containing a fluoroalkyl group-containing organopolysiloxane as the main ingredient.

The compositions of this invention typically include at least one of the conventional curing or vulcanizing agents for the fluororubber ingredient. Typical curing agents for the vinylidene fluoride-type of fluororubbers include but are not limited to polyfunctional amines such as hexamethylenediamine carbamate and organoperoxides such as benzoyl peroxide and dicumyl peroxide, Curing agents for fluorosilicone rubbers include but are not limited to organoperoxides such as 2,4-dichlorobenzoyl peroxide, dicumyl peroxide and 2,5-dimethyl-2,5-di(t-butylperoxy)hexane.

The cured particulate silicone material of the present invention consists of particles or granules having average diameters not in excess of 100 micrometers. The mechanical strength of the fluororubber composition of the present invention substantially declines when this average diameter of the particles exceeds 100 micrometers.

The concentration of particulate cured silicone material in the present compositions is from 0.1 to 30 weight parts, preferably from 0.1 to 15 weight parts, and most preferably from 0.1 to 5 weight parts per 100 weight parts of the fluororubber ingredient. The ability of the particulate silicone material to function as a mold release agent is not apparent at concentrations below about 0.1 weight part, while the mechanical strength of the cured fluororubber can be adversely affected when the concentration of particulate silicone material exceeds about 30 weight parts.

The cured particulate silicone material can be a rubber, gel, or resin. The silicone material, which typically includes at least one organopolysiloxane, has been cured by an addition, condensation or free radical reaction.

Addition reaction-cured silicone materials are typically obtained by curing a composition comprising an organopolysiloxane having at least two silicon-bonded alkenyl groups per molecule, an organohydrogenpolysiloxane having two or more silicon-bonded hydrogen atoms per molecule, and a platinum-containing catalyst.

Organoperoxide-cured silicone materials are typically obtained heating an organopolysiloxane in the presence of an organoperoxide.

Condensation reaction-cured silicone materials are typically obtained by the curing a composition comprising a curing catalyst, an organopolysiloxane containing at least two silanol groups per molecule and, as the curing agent, an organohydrogenpolysiloxane or a silane containing at least three silicon-bonded hydrolyzable groups, such as alkoxy, per molecule. Curing agents containing hydrolyzable groups typically require the presence of atmospheric moisture to activate them.

It will be understood that the curable silicone rubber composition can include additives, such as reinforcing fillers, to modify the physical properties of the cured material.

A preferred type of particulate silicone material is obtained by curing a silicone rubber composition in which at least a portion of the organic groups bonded to the silicon atoms of the organopolysiloxane are fluorinated propyl radicals. The cured silicone material preferably contains an additive to improve compatibility or miscibility, and thereby improve the adhesion between the particulate silicone material and the fluororubber. Examples of suitable additives of this type include but are not limited to fluoropropyl group-containing organoalkoxysilanes such as fluoropropyltrimethoxysilane and fluoropropylmethyldimethoxysilane; epoxy group-containing organoalkoxysilanes such as gamma-glycidoxypropyltrimethoxysilane, and gamma-glycidoxypropylmethyldimethoxysilane, partial hydrolysis condensates of any of these silanes, and epoxy group-containing organic compounds such as glycidyl methacrylate and vinylcyclohexene monoxide.

One method for preparing the particulate cured silicone material is described in United States Patent No. 4,742,142, which issued on May 3, 1988. In accordance with the teaching in this patent a curable silicone rubber is blended with water and a surfactant in a colloid mill or homogenizer to prepare an dispersion of the silicone rubber composition. The silicone rubber composition is then cured in particulate form by dispersing the aqueous dispersion in water heated to a temperature of at least 50 degrees Centigrade.

One method for preparing the fluororubber composition of this invention comprises mixing the fluororubber, particulate cured silicone material and curing agent for the fluororubber to homogeneity using a two-roll mill.

The uncured fluororubber compositions of this invention excel with respect to their ability to be processed on roll mills typically used to for rubber compositions. Cured articles that have been molded using these compositions are readily released from molds without staining the mold surfaces, resulting a low reject rate for the finished articles.

The following examples are intended to describe preferred embodiments of the present compositions and method, and should therefore not be interpreted as limiting the scope of the invention as defined in the accompanying claims. Unless otherwise specified all parts and percentages specified in the examples are by weight and viscosities were measured at 25 degrees C. The molding properties of the fluororubber compositions were tested by the following method.

The fluororubber composition to be evaluated was placed in a chromium-plated mold used to form key pads for electronic calculators. The dimensions of the mold were 10 x 10 x 0.5 cm. The composition was cured at 170 degrees Centigrade for 10 minutes. This molding process was repeated 100 times, and the mold-releasability was evaluated by visually examining the surfaces of the resultant key pads. In addition, the percentage of moldings with rough and/or damaged surfaces was determined and is reported as the molding reject rate in the examples. It was observed that rough and/or damaged surfaces on the key pad were caused mainly by poor mold-release and/or soiling of the mold surfaces.

Example 1

An addition reaction-curing silicone rubber composition was prepared from 100 parts of a dimethylvinylsiloxy-terminated dimethylpolysiloxane having a viscosity of ($2x10^{-3}$ m$^2$/second) (2,000 centistokes) and a vinyl content of 0.25%, 1.5 parts of a trimethylsiloxy-terminated methylhydrogenpolysiloxane having a viscosity of ($1x10^{-5}$ m$^2$/second) (10 centistokes) and a silicon-bonded hydrogen atom content of 0.9%, and 0.15 parts of 3% isopropanolic chloroplatinic acid solution. 5 Parts of a nonionic surfactant available as Tergitol® TMN-6 from Union Carbide Corporation and 200 parts water were then added and mixed into this silicone rubber composition.

The resultant aqueous dispersion of a curable silicone rubber composition was cured by introducing the dispersion into 5000 parts of water maintained at a temperature of 70° C. The cured silicone rubber was then isolated and dried by heating to yield a particulate silicone rubber with an average particle diameter of 10 micrometers.

A curable fluororubber composition of this invention was obtained by kneading the following ingredients to homogeneity on a two-roll mill: 4 parts of the particulate silicone rubber prepared as described in the preceding paragraph, 100 parts of a vinylidene fluoride-type fluororubber (Viton(R) E430 from E.I. DuPont Company), 3 parts calcium hydroxide, 6 parts magnesium oxide, 25 parts carbon black, and 2 parts dicumyl peroxide. This fluororubber composition did not substantially adhere to the surface of the mill rolls, and was judged to have a good roll-workability.

The reject rate for the molded articles was 11%, and the mold-releasability in this test was excellent.

For comparison, a fluororubber composition was prepared as described in the preceding portion of this example, with the exception that the cured particulate silicone rubber was not added. This fluororubber composition readily adhered to the surface of the mill rolls, and was therefore considered to have poor roll-workability. The reject rate for molded articles prepared from this composition was 21%.

Example 2

A condensation reaction-curing silicone rubber composition was prepared from 100 parts of a dimethylhydroxysiloxy-terminated dimethylpolysiloxane having a viscosity of ($1 \times 10^{-4}$ m²/second) ((100 centistokes) 10 parts of the methylhydrogenpolysiloxane described in Example 1, 10 parts gamma-glycidoxypropyltrimethoxysilane to improve the compatibility of the silicone rubber with the fluororubber, and 1 part of stannous octoate as the curing catalyst. The composition was cured as described in Example 1 to yield particles of cured silicone rubber exhibiting an average diameter of 12 micrometers.

The following ingredients were kneaded on a two-roll mill to produce a curable fluororubber composition of this invention: 5 parts silicone rubber powder obtained as described in the first section of this example, 100 parts of a vinylidene fluoride-type fluororubber (Dai-el G901 from Daikin Kogyo Co., Limited), 2 parts dicumyl peroxide, 4 parts triallyl isocyanurate, and 20 parts carbon black. This fluororubber composition had an excellent roll-workability during blending. When the composition was molded , the cured articles released easily from the mold and the reject rate was 8%.

Example 3

A fluororubber composition of this invention was prepared by blending the following ingredients to homogeneity on a two-roll mill: 5 parts of a cured particulate silicone rubber prepared as described in Example 2, 100 parts of a fluorosilicone rubber (LS63u from Toray Silicone Company Limited), and 1 part of 2,5-dimethyl-2,5-di(t-butylperoxy)hexane. The curable composition could be processed on a roll mill without difficulty. Cured articles molded using this composition did not stick to or stain the mold surfaces.

Example 4

A finely divided addition reaction-curing fluorosilicone rubber of this invention was prepared from 100 parts dimethylvinylsiloxy-terminated trifluoropropylmethylsiloxane- dimethylsiloxane copolymer having a vinyl group content of 0.15% and containing 60 mole% of trifluoropropylmethylsiloxane units and 40 mole% dimethylsiloxane units); 1 part of the methylhydrogenpolysiloxane described in Example 1, and 0.15 parts of a 3% isopropanolic chloroplatinic acid solution. The resultant fluorosilicone rubber composition was cured as described for the finely divided material of Example 1 to yield a powder consisting essentially of spherical particles with average diameters of 10 micrometers.

A curable fluororubber composition was prepared using the procedure of Example 2, with the modification that the fluorosilicone rubber powder prepared as described in the preceding section of the present example was used in place of the silicone rubber powder described in Example 2. The resultant composition exhibited a good ability to be blended on the roll mill. The reject rate for the articles molded from this composition was 5%.

Example 5

A silicone rubber powder was prepared using the procedure described in Example 2, with the modification that trifluoropropyltrimethoxysilane was used in place of the gamma-glycidoxypropyltrimethoxysilane used in Example 2.

A curable fluororubber composition was then prepared using the procedure of Example 2, with the modification that the silicone rubber powder obtained as described in the preceding paragraph of the present example above was used in place of the silicone rubber powder described in Example 2. Evaluation of this composition demonstrated its excellent roll-workability, molding properties, and a molding reject rate of 3%.

Example 6

A silicone rubber powder was prepared according to the procedure of Example 1, but without the surfactant described in Example 1. The cured silicone rubber consisted of particles with an average diameter of 20 micrometers.

A fluororubber composition was prepared according to the procedure in Example 1, with the modification that the silicone rubber powder described in the first paragraph of the present example was used in place of the silicone rubber powder of Example 1. The composition exhibited excellent workability on the roll mill and releasability from the mold.

**Claims**

1. In a fluororubber composition comprising
(A) 100 weight parts of a curable fluororubber and
(B) a quantity of a curing agent sufficient to cure the fluororubber,
the improvement comprising the presence of
(C) from 0.1 to 30 weight parts of a finely divided cured silicone material in the form of a rubber, gel or resin, where said silicone material exhibits an average particle diameter not exceeding 100 micrometers.

2. A composition according to Claim 2 wherein the cured silicone material further comprises an additive selected from epoxy group-containing organoalkoxysilanes, partial hydrolysis condensates thereof, fluoropropyl group-containing organoalkoxysilanes and partial hydrolysis condensates thereof.

3. A composition according to Claim 1 where said finely divided silicone material is prepared by blending a curable silicone rubber with water and a surfactant in a colloid mill or homogenizer to form an aqueous dispersion and then curing the resultant dispersion by blending it with water heated to a temperature of at least 50 degrees Centigrade.

4. A composition according to Claim 1 where said fluororubber is a fluorosilicone rubber.

5. A composition according to Claim 1 where said fluororubber is an organic fluororubber.

**Patentansprüche**

1. Fluorkautschukzusammensetzung, umfassend
(A) 100 Gewichtsteile härtbaren Fluorkautschuk und
(B) eine Menge eines Härtungsmittels, die ausreicht, um den Fluorkautschuk zu härten,
wobei die Verbesserung darin besteht, daß weiterhin
(C) 0,1 bis 30 Gewichtsteile feinverteiltes gehärtetes Silikonmaterial in Form eines Kautschuks, Gels oder Harzes vorhanden sind, wobei das Silikonmaterial einen durchschnittlichen Teilchendurchmesser aufweist, der nicht größer ist als 100 μm.

2. Zusammensetzung nach Anspruch 1, worin das gehärtete Silikonmaterial weiterhin ein Additiv enthält, ausgewählt aus Epoxygruppen enthaltenden Organoalkoxysilanen, Teilhydrolysekondensaten davon, Fluorpropylgruppen enthaltenden Organoalkoxysilanen und Teilhydrolysekondensaten davon.

3. Zusammensetzung nach Anspruch 1, worin das feinverteilte Silikonmaterial hergestellt wird durch Vermischen eines härtbaren Silikonkautschuks mit Wasser und einem oberflächenaktiven Mittel in einer Kolloidmühle oder einem Homogenisator unter Bildung einer wäßrigen Dispersion und Härten der entstehenden Dispersion, indem sie mit Wasser, das auf eine Temperatur von mindestens 50°C erhitzt wurde, gemischt wird.

4. Zusammensetzung nach Anspruch 1, worin der Fluorkautschuk Fluorsilikonkautschuk ist.

5. Zusammensetzung nach Anspruch 1, worin der Fluorkautschuk ein organischer Fluorkautschuk ist.

**Revendications**

1. Dans une composition de caoutchouc fluoré contenant :
(A) 100 parties en poids d'un caoutchouc fluoré durcissable et
(B) une quantité d'agent de durcissement suffisante pour durcir le caoutchouc fluoré,
le perfectionnement comprenant la présence
(C) de 0,1 à 30 parties en poids d'une matière silicone durcie finement divisée, sous la forme d'un caoutchouc, d'un gel ou d'une résine, où ladite matière silicone a un diamètre moyen de particules ne dépassant pas 100 μm.

2. Composition selon la revendication 1, dans laquelle la matière silicone durcie contient en outre un additif choisi parmi des organoalcoxysilanes contenant un groupe époxy, des condensats d'hydrolyse partielle de ceux-ci, des organoalcoxysilanes contenant un groupe fluoropropyle, et des condensats d'hydrolyse partielle de ceux-ci.

3. Composition selon la revendication 1, dans laquelle on prépare ladite matière silicone finement divisée en mélangeant un caoutchouc de silicone durcissable avec de l'eau et un agent tensio-actif dans un moulin à colloïdes ou homogénéisateur, pour former une dispersion aqueuse, et ensuite en faisant durcir la dispersion résultante en la mélangeant avec de l'eau chauffée à une température d'au moins 50°C.

4. Composition selon la revendication 1, dans laquelle ledit caoutchouc fluoré est un caoutchouc de fluorosilicone.

5. Composition selon la revendication 1, dans laquelle ledit caoutchouc fluoré est un caoutchouc fluoré organique.